# EUROPÄISCHE PATENTSCHRIFT

(11) **EP 2 532 947 B1**
(45) Veröffentlichungstag und Bekanntmachung des Hinweises auf die Patenterteilung: **12.03.2014**
(21) Anmeldenummer: 11168871.9
(22) Anmeldetag: 07.06.2011
(51) Int. Cl.: F21S 8/00, G01R 31/26, B60P 3/00, B60P 3/14

(54) **Testeinrichtung zur Funktionsmessung eines Solarmoduls, sowie Testfahrzeug**
Test device for measuring the function of a solar module and test vehicle
Dispositif de test pour la mesure de fonction d'un module solaire, et véhicule de test

(43) Veröffentlichungstag der Anmeldung: 12.12.2012
(73) Patentinhaber: ADLER Solar Services GmbH, 28219 Bremen (DE)
(72) Erfinder: Wagner, Hans-Ulrich, 24598 Boostedt (DE)
(74) Vertreter: Eisenführ Speiser

(56) Entgegenhaltungen:
- EP-A2- 0 913 623
- WO-A1-2009/073995
- WO-A1-2010/093048
- US-A- 3 475 045
- US-A1- 2009 147 524
- US-B1- 6 275 295

## Beschreibung

Die vorliegende Erfindung betrifft ein Testfahrzeug mit einem Fahrzeugfond.

Zur Überprüfung der Funktionsfähigkeit von Solarmodulen werden üblicherweise Testeinrichtungen eingesetzt. Die Überprüfung von Solarmodulen auf ihre Funktionsfähigkeit findet entweder in einer Produktionsumgebung, d. h. beim Hersteller des Solarmoduls in einer Werkstattumgebung statt, oder in eigens dafür vorgesehenen Einrichtungen, zu welchen die Solaranlagen im Laufe ihres Lebenszyklus in regelmäßigen Intervallen verbracht werden. Es haben sich bei den Testverfahren und bei bekannten Testelnrichtungen im Wesentlichen zwei Alternativen etabliert. Beiden Alternativen ist gemein, dass zwischen einem Solarmodul und einer Emissions- und/oder Immissionseinheit ein Licht-Strahlengang aufgebaut wird.

Aus der US 2009/0147524 A1, der US 6,275,295 B1 oder der EP 0 913 623 A2 sind beispielsweise Testeinrichtungen zur Funktionsmessung von Solarmodulen bekannt, die ortsgebunden eingerichtet sind.

Gemäß einer ersten Alternative wird von einer Emissionseinheit, die als Blitzlampe ausgebildet ist, ein gerichteter Lichtpuls erzeugt und direkt in Richtung eines gehalterten Solarmoduls ausgesendet. Infolge der Erregung durch den Lichtpuls erzeugt das Solarmodul eine Spannung, welche von einer (gegebenenfalls extern zu der Testeinrichtung vorgesehenen) Auswerteeinheit ausgewertet wird.

Gemäß einer zweiten Alternative wird zum Überprüfen des Solarmoduls das Auftreten von Elektrolumineszenz genutzt. Hierzu wird an dem Solarmodul eine sogenannte Reversespannung angelegt, welche dafür sorgt, dass das Solarmodul seinerseits Licht emittiert. Dieses von dem Solarmodul emittierte Licht wird von einer Immissionseinheit, die als Kamera ausgebildet und zum Empfang von Licht mit der entsprechenden Wellenlänge eingerichtet ist, aufgenommen und wiederum mittels einer (gegebenenfalls extern zu der Testeinrichtung vorgesehenen) Auswerteeinheit verarbeitet.

Insbesondere bei einer Testeinrichtung, die gemäß der ersten Alternative arbeitet, aber auch bei einer Testeinrichtung, die gemäß der zweiten Alternative arbeitet, ist der Platzbedarf auf Grund der Ausbildung des Strahlengangs zwischen der Emissions- und/oder Immissionseinheit und dem Solarmodul von kritischer Bedeutung.

Derzeit am Markt befindliche Blitzlampen erzeugen Lichtpulse mit einem festgelegten Divergenzwinkel von lediglich 15° und weniger. Dies bedeutet, dass ein übliches Solarmodul, welches aus einer Vielzahl von Solarzellen besteht, bei derzeit handelsüblichen Größen einen minimalen Abstand von der Emissionseinheit im Bereich von 6-8 m aufweisen muss, damit das gesamte Modul von der Emissionseinheit ausgeleuchtet wird. Dies ist erforderlich, um aussagekräftige Messergebnisse erhalten zu können. Auf Grund dieser Tatsache ist der Platzbedarf insbesondere in Richtung des Strahlengangs hoch, was sich im Hinblick auf die Aufstellorte der Testeinrichtungen in erhöhten Kosten und verbesserungsbedürftigem Handling auswirkt.

Bei Testeinrichtungen, die gemäß der zweiten Alternative arbeiten, ist bekannt, die Länge des Strahlengangs mittels des Einsatzes von speziellen Optiken auf Seiten der Immissionseinheit zu verkürzen. Die hiermit einhergehende stärkere Brechung des Lichtes und Beeinflussung des Strahlengangs führt jedoch nicht zu Messresultaten mit befriedigender Präzision.

In Ergänzung zu dem eingangs beschriebenen Geschäftsfeld der stationären Funktionsmessung von Solarmodulen wird auf Grund der stark steigenden Anzahl allerorten aufgestellter Solarmodule auch die Vermessung der Solarmodule an ihrem Aufstellungsort oder in dessen Nähe wirtschaftlich bedeutsam.

Bisherige Versuche, mobil verwendbare Testeinrichtungen bereitzustellen, sind aufgrund des großen Platzbedarfs denselben Platzproblemen unterworfen gewesen, wie die eingangs erläuterten stationären Testeinrichtungen.

Somit lag der vorliegenden Erfindung die Aufgabe zu Grunde, eine mobile Funktionsmessung von Solarmodulen bereits in Betrieb befindlicher Solaranlagen am jewelligen Einsatzort zu ermöglichen.

Die Erfindung löst diese Aufgabe mit einem Testfahrzeug der vorstehend genannten Art, indem das Fahrzeug zur mobilen Funktionsmessung von Solarmodulen eingerichtet ist, wobei in den Fahrzeugfond eine Testeinrichtung zur Funktionsmessung eines Solarmoduls integriert ist, welche eine Modulhalterung zur Aufnahme eines Solarmoduls, und eine Emissionseinheit, die als Blitzlampe ausgebildet ist, zum Aussenden eines gerichteten Lichtpulses auf die Modulhalterung und/oder eine Immissionseinheit, die als Kamera ausgebildet ist, zum Empfang von Licht von dem Solarmodul (16), wobei zwischen der Modulhalterung (15) einerseits und der Emissions- und/oder Immissionseinheit anderseits ein Strahlengang (25) ausgebildet ist, und eine Reflektoreinrichtung (17) zur Umlenkung des Strahlengangs (25) zwischen der Emissions- und/oder Immissionseinheit und der Modulhalterung (15) aufweist.

Die Erfindung macht sich hierbei die Erkenntnis zunutze, dass eine Verringerung des Platzbedarfs der Testeinrichtung erreicht werden kann, indem der Strahlengang zwischen der Modulhalterung und der Emissions- und/oder Immissionseinhelt gezielt umgelenkt - gewissermaßen geknickt - wird. Dies bietet den Vorteil, dass die Gesamtstrecke, über die sich der Strahlengang erstreckt, gleich lang bleiben kann und infolgedessen der Öffnungswinkel des von der Emissionseinheit abgegebenen Lichtpulses bzw. die Brennweite der Immissionseinheit zum Einfangen des gesamten Lichts nicht beeinflusst werden muss. Die Umlenkung mittels der Reflektoreinrichtung erlaubt es, bestehende Platzverhältnisse durch Umlenken des Strahlengangs von einer ersten Richtung in eine zweite Richtung besser auszunulzen. Es hat sich zudem herausgestellt, dass überraschenderweise die Reflexion des Strahlengangs mittels einer Reflektoreinrichtung nicht zu einer wesentlichen Beeinflussung der Strahlqualität führt. Befürchtete Beeinträchtigungen durch Streuung und Teilabsorption des eintreffenden Lichts auf die Reflektoreinrichtung machen sich entgegen des zuvor bestehenden Vorurteils nicht wesentlich negativ bemerkbar. Zwar kommt es aufgrund der Reflexion zu einem Leistungsverlust, weil ein gewisser Anteil des Lichts absorbiert wird. Dieser Verlust kann allerdings durch entsprechende Kalibrierung der Emissionseinheit und/oder Immissionseinheit bzw. der an das Solarmodul angelegten Spannung kompensiert werden.

Die Erfindung bietet den Vorteil, dass zur Vermessung handelsüblicher Solarmodule ein Abstand in Längsrichtung des Fahrzeuges zwischen Reflektoreinrichtung und Emissions- und/oder Immissionseinheit bzw. Modulhalterung im Bereich von 3 bis 5 m zur Entfaltung des Strahlengangs ausreichend ist. Somit ist als Testfahrzeug mit Fahrzeugfond vorzugsweise ein Lieferwagen, Kleinbus oder Pritschenwagen vorzusehen. Die Umhausung der Testeinrichtung ist in einem bevorzugten Ausführungsbeispiel die Innenwand bzw. Innenraumverkleidung des Fonds eines solchen Fahrzeugs.

Die vorliegende Erfindung wird dadurch vorteilhaft weitergebildet, dass das zwischen der Emissions- und/oder Immissionselnheit und der Modulhalterung transportierte Licht sich entlang einer Mittelachse erstreckt, wobei die Mittelachse zwischen der Emissions- und/oder Immissionseinheit und der Reflektoreinrichtung in einer ersten Richtung ausgerichtet und zwischen der Modulhalterung und der Reflektoreinrichtung in einer zweiten Richtung ausgerichtet ist, wobei die erste Richtung die zweite Richtung einen spitzen Winkel zwischen sich einschließen. Vorzugsweise liegt der Winkel zwischen der ersten Richtung und der zweiten Richtung in einem Bereich von unterhalb 45°. Unter Mittelachse wird hierbei jeweils die Achse verstanden, um welche herum sich der transportierte Lichtstrahl im Wesentlichen symmetrisch ausbreitet mit einem konstanten Öffnungswinkel.

Gemäß einer bevorzugten Ausführungsform der Erfindung ist die Reflektoreinrichtung im Wesentlichen auf der Hälfte des Strahlengangs zwischen der Modulhalterung und der Emissions- und/oder Immissionseinheit angeordnet. Der Strahlengang bildet gemäß dieser Ausführung ein gleichseitiges Dreieck aus. Die gleich langen Seiten sind hierbei diejenigen, welche sich in Richtung der Mittelachse In der ersten und zweiten Richtung von der Reflektoreinrichtung aus erstrecken. Der Schnittpunkt der Mittelachse auf der Reflexionsebene des einfallenden und reflektierten Lichtstrahls nimmt gemäß dieser Ausführungsform einen günstigen Abstand sowohl zu der Emissions- und/oder Immissionseinheit einerseits und der Modulhalterung andererseits ein. Wird eine andere Anordnung als die vorstehend Beschriebene gewählt, verkürzt sich zwar beispielsweise der Abstand in der ersten Richtung zwischen der Reflektoreinrichtung und der Emissions- und/oder Immissionseinheit, wodurch allerdings im Gegenzug eine Verlängerung des Abstandes zwischen der Reflektoreinrichtung einerseits und der Modulhalterung andererseits in der zweiten Richtung in Kauf genommen werden muss.

Gemäß einer weiteren bevorzugten Ausführung der Erfindung weist die Reflektoreinrichtung eine Spiegeloberfläche auf, welche zur Aufnahme von reflexionshemmenden Mitteln eingerichtet ist. Die reflexionshemmenden Mittel dienen einer gezielten, optional lokal begrenzten Beeinflussung der von der Reflektoreinrichtung absorbierten Lichtmenge. Je nachdem, wo auf der Spiegeloberfläche die reflexionshemmenden Mittel aufgebracht werden, wird an dieser Stelle weniger Licht reflektiert als an übrigen Stellen auf der Spiegeloberfläche der Reflektoreinrichtung. Dieser Effekt wird vorteilhaft dazu benutzt, dass Leuchtprofil des von der Emissionseinheit imitierten Lichtpulses zu homogenisieren. Hierzu benötigt der Fachmann lediglich ein homogenes Solarmodul, welches in der Modulhalterung aufgenommen wird. Durch spalten-, reihen-, oder sektorweisen Betrieb des Solarmoduls derart, dass die jeweiligen Spalten, Reihen oder Sektoren untereinander gleich groß sind und eine jeweils identische Messspannung bei gleicher Lichteinstrahlung erzeugen, können einzelne Oberflächenabschnitte der Reflektoreinrichtung gezielt so mit reflexionshemmenden Mitteln versehen werden, dass tatsächlich die in unterschiedlichen Sektoren, Reihen oder Spalten gemessene Spannung identisch ist. Eine bevorzugte erfindungsgemäße Testeinrichtung weist demzufolge eine Reflektoreinrichtung auf, bei welcher abschnittsweise oder vollständig reflexionshemmende Mittel auf die Spiegeloberfläche aufgebracht sind.

Vorzugsweise sind die reflexionshemmenden Mittel aus der Gruppe Farbauftrag, Haftfolie, Oberflächenaufrauh- und/oder Streugitter ausgewählt.

Die Testeinrichtung weist in einer vorteilhaften Weiterbildung eine Umhausung auf mit einer Rückwand und einer gegenüberliegenden Vorderwand, wobei die Modulhalterung und die Emissions- und/oder Immissionseinheit im Bereich der Rückwand angeordnet sind und die Reflektoreinrichtung im Bereich der Vorderwand. Unter einer Anordnung im Bereich der Rückwand bzw. der Vorderwand wird hierbei verstanden, dass die jeweils dort angeordneten Elemente entweder an der jeweiligen Wand befestigt sind, oder benachbart zu der jeweiligen Wand in einem Abstand von unterhalb einem Meter zu der jeweiligen Wand angeordnet sind. Dies erlaubt eine annähernd symmetrische Anordnung der Modulhalterung, Reflektoreinrichtung und Emissions- und/oder Immissisonseinheit. Dies wiederum verbessert die Homogenität des auf die Modulhalterung auftreffenden bzw. bei der immissionseinheit ankommenden Lichts - bezogen auf den Querschnitt des Strahlengangs normal zur Mittelachse.

Die Umhausung ist vorzugsweise lichtundurchlässig verschließbar, und die Rückwand, Vorderwand sowie sämtliche weitere Wandung sind lichtabsorbierend ausgebildet. Vorzugsweise sind diese Wandungen mattschwarz eingefärbt.

Die Testeinrichtung weist vorzugsweise eine Auswerteinheit auf, die dazu eingerichtet ist, die von einzelnen, mehreren oder sämtlichen Zellen eines der Modulhalterung aufgenommenen Solarmoduls erzeugte Spannung zu erfassen, zu verarbeiten und auszugeben.

Gemäß einer weiteren bevorzugten Ausführungsform der vorliegenden Erfindung weist die Testeinrichtung eine oder mehrere weitere Reflektoreinrichtungen zur Umlenkung des Strahlenganges zwischen der Emissions- und/oder Immissionseinheit und der Modulhalterung auf. Der Strahlengang ist mittels der einen oder mehreren welteren Reflektoreinrichtungen noch weitergehender in eine dritte Richtung und optional weitere Richtungen umlenkbar, was wiederum eine weiter verbesserte Raumnutzung ermöglicht. Der Strahlengang und die weitere bzw. weiteren Reflektoreinrichtungen sind vorzugsweise entsprechend der vorstehenden Ausführungsbeispiele ausgebildet, insbesondere in Bezug auf die Ausbildung der Spiegeloberfläche(n) der Reflektoreinrichtung(en) und die Ausrichtung der weiteren Richtung(en) des Strahlengangs.

Vorzugsweise weist das Testfahrzeug eine lichtdicht verschließbare Klappe in der Rückwand des Fahrzeugfonds auf, die zum Einführen und/oder Entfernen eines Solarmoduls in die bzw. aus der Modulhalterung eingerichtet ist. Dies erlaubt eine zeitsparende und einfache Bestückung der Modulhalterung mit einem zu testenden Solarmodul, ohne dass das Innere der Testeinrichtung betreten werden muss. Hierdurch wird einerseits der Eintrag von Schmutz in das Innere des Fahrzeuges verhindert und andererseits kann das Risiko von Augenverletzungen bei unsachgemäßer Bedienung beispielsweise der als Blitzlampe ausgebildeten Emissionseinheit weitestgehend vermieden werden.

Gemäß einer weiteren bevorzugten Ausbildung des erfindungsgemäßen Testfahrzeugs gibt die Klappe in einer Öffnungsstellung den zwischen der Reflektoreinrichtung und einem extern zu dem Fahrzeug angeordneten Solarmodul entlang der zweiten Richtung transportierten Strahlengang frei. Mittels dieser Klappe ist es in einer alternativen Betriebsform auch möglich, ein Solarmodul unmittelbar in seiner Aufstellposition, beispielsweise an einer Gehäusewand, zu testen. Hierzu muss lediglich das Testfahrzeug mit geöffneter Klappe benachbart zu dem extern angeordneten Solarmodul positioniert sein. Anstelle der intern im Fahrzeug angeordneten Modulhalterung ist das Solarmodul gemäß dieser alternativen Ausführungsform unmittelbar an seinem Aufstellungsort angeordnet, und ein Test kann erfolgen, ohne dass das Modul aus seinem Aufstellort entfernt werden muss.

Gemäß einer weiteren alternativen Ausführungsform ist die Emissions- und/oder Immissionseinheit schwenkbar innerhalb des Fahrzeugs angeordnet. Vorzugsweise ist die Emissions- und/oder Immissionseinheit derart schwenkbar angeordnet, dass der Strahlengang zwischen der Emissions- und/oder Immissionseinheit und einem extern zu dem Fahrzeug angeordneten Solarmodule in der Öffnungsstellung der Klappe freigegeben ist. Es wurde vorstehend ausführlich erläutert, dass es im Hinblick auf den Platzbedarf innerhalb der Testeinrichtung vorteilhaft ist, den Strahlengang mittels Umlenkung über die Reflektoreinrichtung den entsprechenden Platzbedürfnissen anzupassen. Eine schwenkbare Anordnung der Emissions- und/oder Immissionseinheit erlaubt es hingegen zusätzlich, den Strahlengang von der Reflektoreinrichtung fortzuschwenken und direkt auf ein extern zu dem Testfahrzeug angeordnetes Solarmodul zu richten, wenn das Testfahrzeug entsprechend relativ zu dem extern angeordneten Solarmodul positioniert ist. Durch Variation des Abstandes des Fahrzeuges von dem extern angeordneten Solarmodul lassen sich Solarmodule beliebiger Größe mit dem erfindungsgemäßen Testfahrzeug vermessen, ohne das Solarmodule jeweils demontieren zu müssen.

Die Erfindung wird im Folgenden anhand zweier bevorzugter Ausführungsbeispiele und unter Bezugnahme auf die beiliegenden Figuren näher beschrieben. Hierbei zeigen:
- Figur 1: eine schematische Darstellung einer Testeinrichtung gemäß einem bevorzugten Ausführungsbeispiel der Erfindung,
- Figur 2: ein Testfahrzeug gemäß einem bevorzugten Ausführungsbeispiel der vorliegenden Erfindung, und
- Figur 3: eine schematische Darstellung einer Reflektoreinrichtung der erfindungsgemäßen Testeinrichtung.

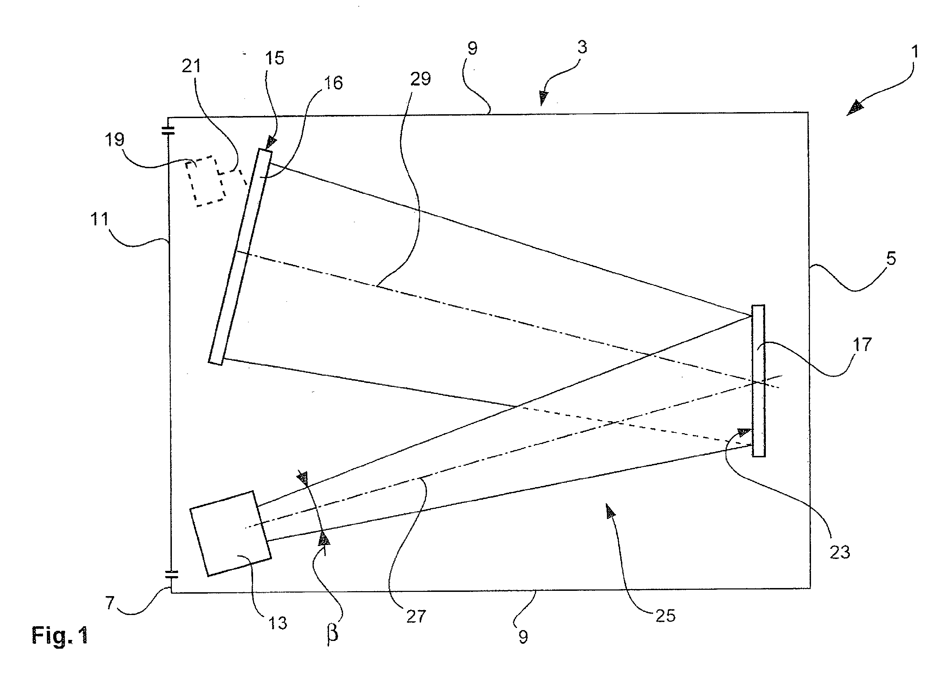

In Figur 1 ist eine schematische Darstellung der erfindungsgemäßen Testeinrichtung 1 abgebildet. Die Testeinrichtung 1 weist eine Umhausung 3 auf. Die Umhausung weist eine Vorderwand 5, eine Rückwand 7 sowie zwei Seitenwände 9 auf. Gezeigt ist mithin eine prinzipielle Draufsicht auf die Testeinrichtung 1. Die Rückwand 7 weist eine lichtdicht verschließbare Klappe 11 auf. Im Inneren der Testeinrichtung 1 ist eine Emissionseinheit 13 angeordnet. Die Emissionseinheit 13 ist dazu ausgebildet, gerichtetes Licht in Form eines Strahlenganges 25 in Pulsform abzugeben. Der Strahlengang 25 erstreckt sich ausgehend von der Emissionseinheit 13, die als Blitzlampe ausgebildet ist, entlang einer Mittelachse in einer ersten Richtung 27 mit einem Öffnungswinkel *β* zu einer Reflektoreinrichtung 17. Die Reflektoreinrichtung 17 weist eine Spiegeloberfläche 23 auf. An der Spiegeloberfläche 23 wird das von der Emissionseinheit 13 eintreffende Licht reflektiert und entlang einer zweiten Richtung 29 auf eine Modulhalterung 15 reflektiert. Die Modulhalterung 15 ist zur Aufnahme von Solarmodulen eingerichtet. In Figur 1 ist angedeutet, wie ein Solarmodul 16 in der Modulhalterung 15 angeordnet ist. Die Modulhalterung 15 ist mittels einer Signalleitung 21 mit einer Auswerteinheit 19 verbunden.

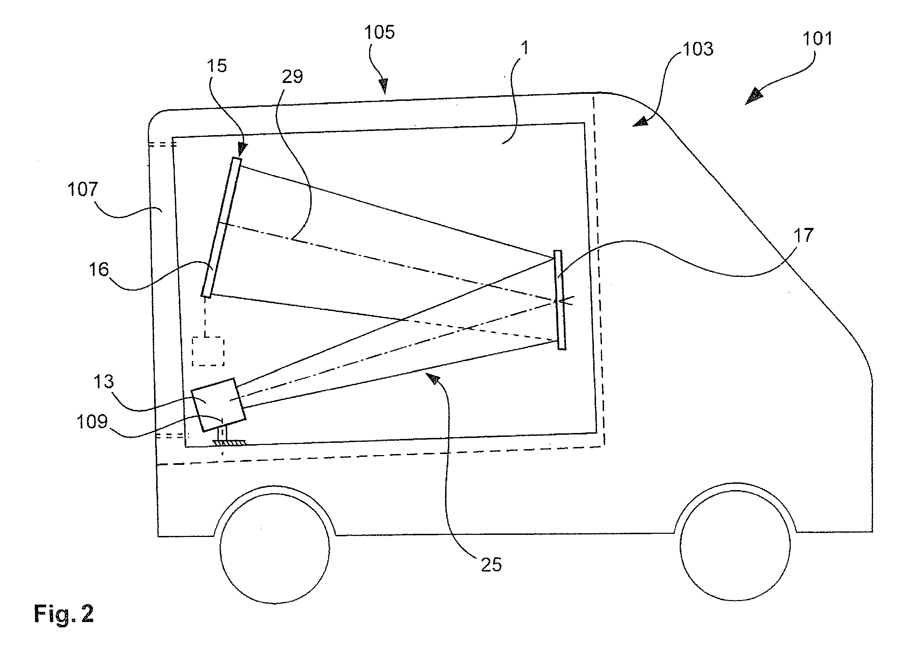

Figur 2 zeigt in einer Seitenansicht eine schematische Darstellung eines erfindungsgemäßen Testfahrzeugs 101 gemäß einem bevorzugten Ausführungsbeispiel der Erfindung. Das Testfahrzeug 101 ist beispielsweise ein Lieferwagen, Minibus oder Pritschenwagen. Das Testfahrzeug 101 weist eine Fahrerkabine 103 und einen Fahrzeugfond 105 auf. Der Fahrzeugfond 105 ist mittels einer lichtdicht verschließbaren Klappe 107 verschlossen. Innerhalb des Fahrzeugfonds ist eine Testeinrichtung 1 gemäß dem bevorzugten Ausführungsbeispiel aus Figur 1 angeordnet. In Bezug auf die Testeinrichtung 1 wird insoweit auf die vorstehenden Erläuterungen verwiesen.

Die Klappe 107 ist so angepasst, dass in einer Öffnungsstellung der Klappe 107 der Strahlengang 25 in der zweiten Richtung 29 das Innere des Fahrzeugfonds 105 durch die Klappe 107 hindurch verlassen kann.

Die Emissionseinheit 13 ist um eine Schwenkachse 109 derart schwenkbar gelagert, das der Strahlengang 25 von dem Reflektor 17 weggeschwenkt werden kann, wodurch sich in einer Öffnungsstellung der Klappe 107 bei ausreichender Schwenkung um die Schwenkachse 109 der Strahlengang 25 durch die von der Klappe 107 freigegebene Öffnung hindurch erstreckt.

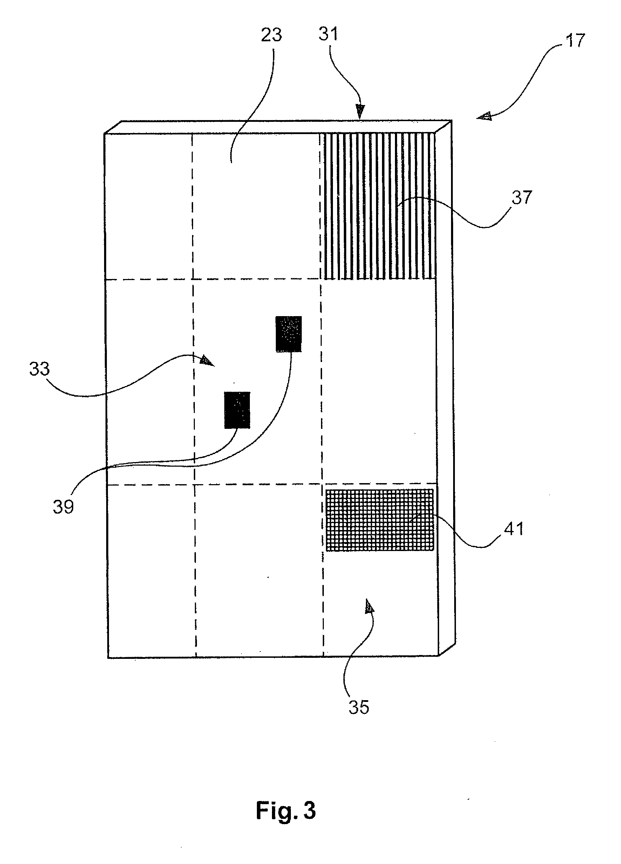

Figur 3 zeigt eine schematische Ansicht einer Reflektoreinrichtung 17, geeignet zum Einsatz in der erfindungsgemäßen Testeinrichtung 1 und/oder dem erfindungsgemäßen Testfahrzeug 101. Die Reflektoreinrichtung 17 weist die Spiegeloberfläche 23 auf. Gemäß der in Figur 3 dargestellten Ausführungsform ist die Spiegeloberfläche 23 der Reflektoreinrichtung 17 in eine Vielzahl von Sektoren unterteilt. Insbesondere weist die Spiegeloberfläche 23 einen ersten Sektor 31, einen zweiten Sektor 33 und einen dritten Sektor 35 auf. Die Spiegeloberfläche 23 ist zur Aufnahme von reflexionshemmenden Mitteln ausgebildet. In Figur 3 dargestellt sind beispielhaft drei Ausführungsformen reflexionshemmender Mittel. In dem ersten Sektor 31 ist ein reflexionshemmendes Mittel 37 in Form eines Streifenmusters aufgetragen. Das Streifenmuster 37 ist mittels Farbauftrag, beispielsweise mittels eines Lackstifts, auf die Spiegeloberfläche 23 aufgetragen. In dem zweiten Sektor 33 sind Reflexionsmittel 39 in Form von Haftfolie aufgebracht. In denjenigen Bereichen, in denen die Haftfolie 39 aufgetragen ist, ist der zweite Sektor 33 punktuell verdunkelt und die Reflexion entsprechend vermindert.

In dem dritten Sektor 35 ist ein reflexionshemmendes Mittel 41 in Form eines Streugitters aufgebracht. Das Streugitter 41 sorgt mittels Interferenz für eine veränderte Ablenkung der kohärenten Lichtanteile des Lichtpulses. In Situationen, wo kein kohärentes Licht auf die Spiegeloberfläche 23 auftrifft, sorgt das Gitter für eine Verdunkelung und auf diesem Wege für eine Reflexionshemmung.

## Patentansprüche

1. Testfahrzeug (101) mit einem Fahrzeugfond (105),
**dadurch gekennzeichnet, dass** das Testfahrzeug zur mobilen Funktionsmessung eines Solarmoduls (16) eingerichtet ist, wobei in den Fahrzeugfond (105) eine Testeinrichtung (1) zur Funktionsmessung eines Solarmoduls (16) integriert ist, welche eine Modulhalterung (15) zur Aufnahme eines Solarmoduls (16), und
eine Emissionseinheit (13), die als Blitzlampe ausgebildet ist, zum Aussenden eines gerichteten Lichtpulses auf die Modulhalterung (15) und/oder
eine Immissionseinheit, die als Kamera ausgebildet ist, zum Empfang von Licht von dem Solarmodul (16), wobei zwischen der Modulhalterung (15) einerseits und der Emissions- und/oder Immissionseinheit anderseits ein Strahlengang (25) ausgebildet ist, und
eine Reflektoreinrichtung (17) zur Umlenkung des Strahlengangs (25) zwischen der Emissions- und/oder Immissionseinheit und der Modulhalterung (15) aufweist.

2. Testfahrzeug (101) nach Anspruch 1,
**dadurch gekennzeichnet, dass** das zwischen der Emissions- und/oder Immissionseinheit und der Modulhalterung (15) transportierte Licht sich entlang einer Mittelachse erstreckt, wobei die Mittelachse zwischen der Emissions- und/oder Immissionseinheit und der Reflektoreinrichtung (17) in einer ersten Richtung (27) ausgerichtet ist und zwischen der Modulhalterung (15) und der Reflektoreinrichtung (17) in einer zweiten Richtung (29) ausgerichtet ist, wobei die erste Richtung (27) und die zweite Richtung (29) einen spitzen Winkel zwischen sich einschließen.

3. Testfahrzeug (101) nach Anspruch 2,
**dadurch gekennzeichnet, dass** der Winkel zwischen der ersten Richtung (27) und der zweiten Richtung (29) in einem Bereich von 45° und weniger liegt.

4. Testfahrzeug (101) nach einem der vorstehenden Ansprüche,
**dadurch gekennzeichnet, dass** die Reflektoreinrichtung (17) im Wesentlichen auf der Hälfte des Strahlengangs (25) zwischen der Modulhalterung (15) und der Emissions- und/oder Immissionseinheit angeordnet ist.

5. Testfahrzeug (101) nach einem der vorstehenden Ansprüche,
**dadurch gekennzeichnet, dass** die Reflektoreinrichtung (17) eine Spiegeloberfläche (23) aufweist, welche zur Aufnahme von reflexionshemmenden Mitteln (37, 39, 41) eingerichtet ist.

6. Testfahrzeug (101) nach Anspruch 5,
**gekennzeichnet durch** reflexionshemmende Mittel (37, 39, 41), welche abschnittsweise oder vollständig auf die Spiegeloberfläche (23) der Reflektoreinrichtung (17) aufgebracht sind.

7. Testfahrzeug (101) nach Anspruch 5 oder 6,
**dadurch gekennzeichnet, dass** die reflexionshemmenden Mittel (37. 39, 41), aus der Gruppe
Farbauftrag,
Haft-Folie,
Oberflächenaufrauhung und/oder
Streugitter ausgewählt sind.

8. Testfahrzeug (101) nach einem der vorstehenden Ansprüche,
**gekennzeichnet durch** eine Umhausung (3) mit einer Rückwand (11) und einer gegenüberliegenden Vorderwand (5), wobei die Modulhalterung (15) und die Emissions- und/oder Immissionseinhelt im Bereich der Rückwand (11) angeordnet sind und die Reflektoreinrichtung (17) im Bereich der Vorderwand (5).

9. Testfahrzeug (101) nach Anspruch 8,
**dadurch gekennzeichnet, dass** die Umhausung (3) lichtundurchlässig verschließbar ist und die Rückwand (11), Vorderwand (5) sowie sämtliche weitere Wandungen (9) lichtabsorbierend ausgebildet sind, vorzugsweise mattschwarz eingefärbt sind.

10. Testfahrzeug (101) nach einem der vorstehenden Ansprüche,
**gekennzeichnet durch** eine Auswerteinheit (19), die dazu eingerichtet ist, die von einzelnen, mehreren oder sämtlichen Zellen eines in der Modulhalterung (15) aufgenommenen Solarmoduls (16) erzeugte Spannung zu erfassen, verarbeiten und auszugeben.

11. Testfahrzeug (101) nach einem der vorstehenden Ansprüche,
**gekennzeichnet durch** eine oder mehrere weitere Reflektoreinrichtungen zur Urnlenkung des Strahlengangs (25) zwischen der Emissions- und/oder Immissionsefnheit und der Modulhalterung (15).

12. Testfahrzeug (101) nach einem der vorstehenden Ansprüche,
**gekennzeichnet durch** eine lichtdicht verschließbare Klappe (107) in der Rückwand (11) des Fahrzeugfonds (105) zum Einführen und/oder Entfernen eines Solarmoduls (16) in die bzw, aus der Modulhalterung (15).

13. Testfahrzeug (101) nach Anspruch 12,
**dadurch gekennzeichnet, dass** die Klappe (107) in einer Öffnungsstellung den zwischen der Reflektoreinrichtung und einem extern zu dem Fahrzeug angeordneten Solarmodul (16) entlang der zweiten Richtung (29) transportierten Strahlengang (25) freigibt.

14. Testfahrzeug (101) nach einem der Ansprüche 1 bis 13,
**dadurch gekennzeichnet, dass** die Emissions- und/oder Immissionseinheit schwenkbar innerhalb des Fahrzeugs (101) angeordnet ist.

15. Testfahrzeug (101) nach Anspruch 14,
**dadurch gekennzeichnet, dass** die Emissions- und/oder Immissionseinheit derart schwenkbar angeordnet ist, dass der Strahlengang (25) zwischen der Emissions- und/oder Immissionseinhelt und einem extern zu dem Fahrzeug (101) angeordneten Solarmodul (16) in der Öffnungsstellung der Klappe (107) freigegeben ist.

## Claims

1. A test vehicle (101) with a rear vehicle compartment (105),
**characterised in that** the test vehicle is set up for mobile measurement of the operation of a solar module (16), with a test means (1) for measurement of the operation of a solar module (16) being integrated in the rear vehicle compartment (105), which means has a module holding means (15) for accommodating a solar module (16), and
an emission unit (13), which is designed as a flash lamp, for emitting a directional light pulse onto the module holding means (15), and/or
an immission unit, which is designed as a camera, for receiving light from the solar module (16), with a beam path (25) being formed between the module holding means (15) on one hand and the emission unit and/or immission unit on the other hand, and
a reflector means (17) for deflecting the beam path (25) between the emission unit and/or immission unit and the module holding means (15).

2. A test vehicle (101) according to Claim 1, **characterised in that** the light transported between the emission unit and/or immission unit and the module holding means (15) extends along a centre line, the centre line being oriented in a first direction (27) between the emission unit and/or immission unit and the reflector means (17) and in a second direction (29) between the module holding means (15) and the reflector means (17), the first direction (27) and the second direction (29) enclosing an acute angle between them.

3. A test vehicle (101) according to Claim 2, **characterised in that** the angle between the first direction (27) and the second direction (29) lies in a range of 45° and less.

4. A test vehicle (101) according to one of the preceding claims, **characterised in that** the reflector means (17) is arranged substantially on the half of the beam path (25) between the module holding means (15) and the emission unit and/or immission unit.

5. A test vehicle (101) according to one of the preceding claims, **characterised in that** the reflector means (17) has a mirrored surface (23) which is set up to accommodate reflection-inhibiting means (37, 39, 41).

6. A test vehicle (101) according to Claim 5, **characterised by** reflection-inhibiting means (37, 39, 41) which are applied in sections or completely on to the mirrored surface (23) of the reflector means (17).

7. A test vehicle (101) according to Claim 5 or 6, **characterised in that** the reflection-inhibiting means (37, 39, 41) are selected from the group
application of paint,
adhesive film,
surface roughening and/or
scatter grid.

8. A test vehicle (101) according to one of the preceding claims, **characterised by** an enclosure (3) with a rear wall (11) and an opposing front wall (5), the module holding means (15) and the emission unit and/or immission unit being arranged in the region of the rear wall (11), and the reflector means (17) in the region of the front wall (5).

9. A test vehicle (101) according to Claim 8, **characterised in that** the enclosure (3) can be closed so as to be impervious to light, and the rear wall (11), front wall (5) and all the further walls (9) are designed to be light-absorbing, preferably are coloured matt black.

10. A test vehicle (101) according to one of the preceding claims, **characterised by** an evaluation unit (19) which is set up to detect, process and emit the voltage generated by individual, a plurality of or all the cells of a solar module (16) accommodated in the module holding means (15).

11. A test vehicle (101) according to one of the preceding claims, **characterised by** one or more further reflector means for deflecting the beam path (25) between the emission unit and/or immission unit and the module holding means (15).

12. A test vehicle (101) according to one of the preceding claims, **characterised by** a flap (107) which can be closed so as to be light-proof in the rear wall (11) of the rear vehicle compartment (105) for introducing and/or removing a solar module (16) into or from the module holding means (15) respectively.

13. A test vehicle (101) according to Claim 12, **characterised in that** the flap (107) in an opening position releases the beam path (25) which is transported along the second direction (29) between the reflector means and a solar module (16) which is arranged externally to the vehicle.

14. A test vehicle (101) according to one of Claims 1 to 13, **characterised in that** the emission unit and/or immission unit is arranged pivotably within the vehicle (101).

15. A test vehicle (101) according to Claim 14, **characterised in that** the emission unit and/or immission unit is arranged pivotably such that the beam path (25) is released between the emission unit and/or immission unit and a solar module (16) which is arranged externally to the vehicle (101) in the opening position of the flap (107).

## Revendications

1. Véhicule de test (101) comprenant un arrière de véhicule (105),
**caractérisé en ce que** le véhicule de test est conçu pour la mesure mobile d'une fonction d'un module solaire (16), dans lequel un dispositif de test (1) pour mesurer la fonction d'un module solaire (16) est intégré dans l'arrière de véhicule (105), lequel présente un support de module (15) pour loger un module solaire (16), et une unité d'émission (13), réalisée sous la forme d'une lampe-éclair, pour émettre une impulsion de lumière orientée sur le support de module (15) et/ou une unité d'immission, réalisée sous la forme d'une caméra, pour recevoir de la lumière en provenance du module solaire (16), dans lequel une trajectoire des rayons (25) est formée entre le support de module (15) d'une part et l'unité d'émission et/ou d'immission d'autre part, et un dispositif réflecteur (17) pour dévier la trajectoire des rayons (25) entre l'unité d'émission et/ou d'immission et le support de module (15).

2. Véhicule de test (101) selon la revendication 1,
**caractérisé en ce que** la lumière transportée entre l'unité d'émission et/ou d'immission et le support de module (15) s'étend le long d'un axe médian, dans lequel l'axe médian est orienté, dans une première direction (27), entre l'unité d'émission et/ou d'immission et le dispositif réflecteur (17) et, dans une deuxième direction (29), entre le support de module (15) et le dispositif réflecteur (17), la première direction (27) et la deuxième direction (29) formant entre elles un angle aigu.

3. Véhicule de test (101) selon la revendication 2,
**caractérisé en ce que** l'angle formé entre la première direction (27) et la deuxième direction (29) se situe dans une plage allant au maximum jusqu'à 45°.

4. Véhicule de test (101) selon l'une quelconque des revendications précédentes,
**caractérisé en ce que** le dispositif réflecteur (17) est disposé essentiellement sur la moitié de la trajectoire des rayons (25) entre le support de module (15) et l'unité d'émission et/ou d'immission.

5. Véhicule de test (101) selon l'une quelconque des revendications précédentes,
**caractérisé en ce que** le dispositif réflecteur (17) présente une surface miroir (23) qui est configurée pour loger des moyens antiréfléchissants (37, 39, 41).

6. Véhicule de test (101) selon la revendication 5,
**caractérisé par** des moyens antiréfléchissants (37, 39, 41), lesquels sont installés par endroits ou totalement sur la surface miroir (23) du dispositif réflecteur (17).

7. Véhicule test (101) selon la revendication 5 ou 6,
**caractérisé en ce que** les moyens antiréfléchissants (37, 39, 41) sont choisis parmi le groupe comprenant
une application de couleur,
un film adhésif,
une rugosité de surface et/ou
une grille de diffusion.

8. Véhicule de test (101) selon l'une quelconque des revendications précédentes,
**caractérisé par** une enceinte (3) avec une paroi arrière (11) et d'une paroi avant (5) opposée, dans lequel le support de module (15) et l'unité d'émission et/ou d'immission sont disposés dans la zone de la paroi arrière (11) et que le dispositif réflecteur (17) est disposé dans la zone de la paroi avant (5).

9. Véhicule de test (101) selon la revendication 8,
**caractérisé en ce que** l'enceinte (3) peut être fermée de manière à ne pas laisser passer la lumière, et **en ce que** la paroi arrière (11), la paroi avant (5) ainsi que toutes les autres parois (9) sont réalisées de manière à absorber la lumière, de préférence sont teintées en noir mat.

10. Véhicule de test (101) selon l'une quelconque des revendications précédentes,
**caractérisé par** une unité d'analyse (19) qui est configurée pour détecter, traiter et délivrer la tension produite par d'uniques, plusieurs ou toutes les cellules d'un module solaire (16) logé dans le support de module (15).

11. Véhicule de test (101) selon l'une quelconque des revendications précédentes,
**caractérisé par** un ou plusieurs dispositifs réflecteurs pour dévier la trajectoire des rayons (25) entre l'unité d'émission et/ou d'immission et le support de module (15).

12. Véhicule de test (101) selon l'une quelconque des revendications précédentes,
**caractérisé par** une trappe (107) pouvant être fermée de manière étanche à la lumière dans la paroi arrière (11) de l'arrière de véhicule (105) pour introduire et/ou retirer un module solaire (16) dans ou hors du support de module (15).

13. Véhicule de test (101) selon la revendication 12,
**caractérisé en ce que** la trappe (107) dégage dans une position ouverte la trajectoire des rayons (25) transporté le long de la deuxième direction (29) entre le dispositif réflecteur et un module solaire (16) disposé à l'extérieur du véhicule.

14. Véhicule de test (101) selon l'une quelconque des revendications 1 à 13,
**caractérisé en ce que** l'unité d'émission et/ou d'immission est disposée de manière à pouvoir pivoter à l'intérieur du véhicule (101).

15. Véhicule de test (101) selon la revendication 14,
**caractérisé en ce que** l'unité d'émission et/ou d'immission est disposée de manière à pouvoir pivoter de telle manière que la trajectoire des rayons (25) est dégagée entre l'unité d'émission et/ou d'immission et un module solaire (16) disposé à l'extérieur par rapport au véhicule (101), dans la position ouverte de la trappe (107).
